(19) Europäisches Patentamt
European Patent Office
Office européen des brevets

(11) **EP 2 150 509 B1**

(12) **EUROPÄISCHE PATENTSCHRIFT**

(45) Veröffentlichungstag und Bekanntmachung des Hinweises auf die Patenterteilung:
**04.12.2013 Patentblatt 2013/49**

(21) Anmeldenummer: **08759627.6**

(22) Anmeldetag: **15.05.2008**

(51) Int Cl.:
**C04B 111/00** (2006.01)    **C04B 111/62** (2006.01)
**C04B 28/02** (2006.01)

(86) Internationale Anmeldenummer:
**PCT/EP2008/055960**

(87) Internationale Veröffentlichungsnummer:
**WO 2008/145532 (04.12.2008 Gazette 2008/49)**

(54) **HERSTELLUNG VON FESTMASSEN AUF BASIS VON HYDRAULISCH ABBINDENDEN BESCHICHTUNGSMITTELN**

PRODUCTION OF SOLID MATERIALS BASED ON HYDRAULICALLY SETTING COATING AGENTS

PROCÉDÉ DE PRODUCTION DE MATIÈRES SOLIDES À BASE D'AGENTS DE REVÊTEMENT À PRISE HYDRAULIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.05.2007 DE 102007024964**

(43) Veröffentlichungstag der Anmeldung:
**10.02.2010 Patentblatt 2010/06**

(73) Patentinhaber: **Wacker Chemie AG**
**81737 München (DE)**

(72) Erfinder: **BONIN, Klaus**
**84489 Burghausen (DE)**

(74) Vertreter: **Schuderer, Michael et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 0 812 812      WO-A-00/05283**
**WO-A-02/066393      WO-A-2007/093551**

**Beschreibung**

Die Erfindung betrifft Verfahren zur Herstellung von Festmassen auf Basis von hydraulisch abbindenden Beschichtungsmitteln.

Für die Herstellung von Festmassen auf Basis von hydraulisch abbindenden Beschichtungsmitteln wie beispielsweise Beton oder Mörtel sind maschinelle Verfahren wie auch Handverfahren gebräuchlich. Die Eigenschaften der Festmassen hängen allerdings wesentlich von der Art und Ausgestaltung ihrer Herstellung ab.

Bei den Handverfahren werden die hydraulisch abbindenden Beschichtungsmittel beispielsweise mit einer Kelle auf den Untergrund aufgetragen. Bei maschinellen Verfahren werden die hydraulisch abbindenden Beschichtungsmittel in einer Förderleitung einer Spritzdüse zugeführt, mit der die hydraulisch abbindenden Beschichtungsmittel auf den jeweiligen Untergrund aufgetragen werden. Maschinelle Verfahren wie beispielsweise das Trocken- bzw. Nassspritzverfahren sind in DIN18551 beschrieben. Beim Trockenspritzverfahren werden hydraulisch abbindende Beschichtungsmittel in Form von Trockenmischungen eingesetzt und in der Spritzdüse mit Wasser angemacht. Beim Nassspritzverfahren werden wässrige hydraulisch abbindende Beschichtungsmittel eingesetzt. In der Spritzdüse können den hydraulisch abbindenden Beschichtungsmitteln beim Nassspritzverfahren wie beim Trockenspritzverfahren weitere Additive wie beispielsweise Abbindebeschleuniger zugesetzt werden. Nach Abbinden der hydraulisch abbindenden Beschichtungsmittel werden die Festmassen erhalten.

So beschreibt die EP-A 0812812 maschinelle Verfahren zur Applikation von Polymer-modifizierten, hydraulisch abbindenden Beschichtungsmitteln, die niedermolekulare Alkanolamine und gegebenenfalls niedermolekulare kationische quartäre Ammonium-Verbindungen enthalten. Die WO-A 02/066393 empfiehlt Handverfahren wie auch maschinelle Verfahren zur Verarbeitung von zementären  Massen, die wasserlösliche kationische Polymere und wasserlösliche anionische Polymere enthalten. Die WO-A 00/05283 offenbart schließlich die Verwendung von hydraulisch abbindenden Beschichtungsmitteln, die kationische Polymere und weitere Polymere auf Basis auf Basis von ethylenisch ungesättigten Monomeren enthalten, als Fliesenkleber. Die WO-A 2007/093551 beschreibt schließlich die Herstellung von kationisch stabilisierten, in Wasser redispergierbaren Polymerpulverzusammensetzungen durch Polymerisation von ethylenisch ungesättigten Monomeren in wässrigem Medium und anschließendem Trocknen in Gegenwart von kationischen, polymeren Schutzkolloiden sowie die Verwendung derartiger Polymerpulverzusammensetzungen in Dichtungsschlämmen, Fliesenklebern oder Putzen.

Die Festigkeit der Festmassen hängt beispielsweise vom Luftgehalt bzw. von der Dichte der Festmassen ab und korreliert mit der statistischen Verteilung der Luftporendurchmesser (Luftporenverteilung). Die Festigkeit der Festmassen kann gesteigert werden, indem die wässrigen Beschichtungsmittel bei Anwendung nach dem Spritzverfahren mit Druckluft durch die Spritzdüse  gepresst werden, so dass die hydraulisch abbindenden Beschichtungsmittel auf hohe Geschwindigkeiten beschleunigt werden und schließlich beim Aufprall auf dem Untergrund einen starken Rückprall erfahren. Infolge des Rückpralls entweicht ein Teil der Luft aus den hydraulisch abbindenden Beschichtungsmitteln und die hydraulisch abbindenden Beschichtungsmitteln werden verdichtet. Zudem ändert sich auch die Luftporenverteilung in den hydraulisch abbindenden Beschichtungsmitteln. Insgesamt führt der Aufprall zu einer Steigerung der Festigkeit der hydraulisch abbindenden Beschichtungsmittel. Die Beschleunigung von hydraulisch abbindenden Beschichtungsmitteln mit Druckluft kann mit dem Luftmengenfaktor quantifiziert werden:

$$\text{Luftmengenfaktor} = (\text{Druckluftvolumen}/t) \ / \ (\text{Betonvolumen}/t)$$

Die Variable t steht in der Formel des Luftmengenfaktors für eine Zeitangabe. Der Luftmengenfaktor ist eine dimensionslose Kennzahl und nimmt bei maschinellen Verfahren üblicherweise Werte von 144 bis 240 an.

Die mit Druckluft und den genannten Luftmengenfaktoren applizierten hydraulisch abbindenden Beschichtungsmittel führen zu Festmassen, die gegenüber nach dem Handverfahren hergestellten Festmassen einen um ca. 5% geringeren Luftgehalt und folglich eine entsprechend höhere Dichte haben. Des Weiteren hat der Einsatz von Druckluft einen sehr starken Einfluss auf die Luftporenverteilung in den hydraulisch abbindenden Beschichtungsmitteln bzw. in den entsprechenden Festmassen. So haben in Festmassen, die nach dem Handverfahren hergestellten wurden, meist über 40% der Luftporen einen Durchmesser im Bereich von 500 bis 50000 nm. Dahingegen haben in Festmassen, die nach dem Spritzverfahren mit den o.g. Luftmengenfaktoren hergestellt wurden, meist erheblich weniger als 35% der Luftporen einen Durchmesser von 500 bis 50000 nm.

Allerdings führt die Anwendung von Druckluft mit den o.g. Luftmengenfaktoren in den Spritzverfahren auch dazu, dass die hydraulisch abbindenden Beschichtungsmittel in Folge des Aufpralls  auf dem Untergrund zu einem erheblichen Teil wieder vom Untergrund abfallen (Rückprall) und als nutzloser Abfall von der Baustelle entfernt und entsorgt werden müssen. Der Rückprall beträgt meist mehr als 20 Prozent des Auftrags. Ein weiterer Nachteil ist der hohe apparative und energetische Aufwand, der mit dem Einsatz von Druckluft für derartig hohe Luftmengenfaktoren verbunden ist.

Vor diesem Hintergrund bestand die Aufgabe, maschinelle Verfahren zur Herstellung von Festmassen auf Basis von hydraulisch abbindenden Beschichtungsmitteln bereit zu stellen, bei denen nur ein geringer Rückprall auftreten soll und durch die zugleich Festmassen zugänglich sein sollen, die in ihren Eigenschaften den nach maschinellen Verfahren unter Anwendung von Luftmengenfaktoren von 144 bis 240 erhältlichen Festmassen entsprechen.

Die Aufgabe wurde überraschenderweise im Wesentlichen dadurch gelöst, dass hydraulisch abbindende Beschichtungsmittel eingesetzt wurden, die ein oder mehrere kationische Schutzkolloide enthalten. Mit den erfindungsgemäßen hydraulisch abbindenden Beschichtungsmitteln werden nach dem maschinellen Verfahren mit Luftmengenfaktoren von 10 bis 100 Festmassen mit Eigenschaften erhalten, wie sie bisher nur bei Anwendung von maschinellen Verfahren und Luftmengenfaktoren von 144 bis 240 zugänglich waren. Auf Grund der niedrigen Luftmengenfaktoren bei Anwendung des erfindungsgemäßen maschinellen Verfahrens erfahren die hydraulisch abbindenden Beschichtungsmittel auf dem Untergrund nur einen geringen Aufprall, so dass auch nur ein sehr geringer Rückprall entsteht.

Gegenstand der Erfindung ist ein Verfahren zur Herstellung von Festmassen mit einem Luftgehalt von $\leq 16{,}0$ Volumen-%, bezogen auf das Gesamtvolumen der Festmassen, dadurch gekennzeichnet, dass hydraulisch abbindende Beschichtungsmittel enthaltend ein oder mehrere polymere Schutzkolloide, die kationische Ladungen enthalten, (kationische Schutzkolloide) und ein oder mehrere Polymerisate auf Basis von Vinylacetat, Vinylpropionat, Vinylbutyrat, Vinyl-2-ethylhexanoat, Vinyllaurat, 1-Methylvinyl-acetat, Vinylpivalat, VeoVa9® oder VeoVa10® (Handelsnamen der Firma Shell), Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat, Ethylen, Propylen, 1,3-Butadien, Styrol, Vinyltoluol oder Vinylchlorid nach maschinellen Verfahren unter Einsatz von Druckluft mit Luftmengenfaktoren von 10 bis 100 auf einen Untergrund aufgetragen werden.

Beim maschinellen Verfahren werden Luftmengenfaktoren von vorzugsweise 10 bis 50, besonders bevorzugt von 10 bis 25 und am meisten bevorzugt von 12 bis 20 gewählt. Der Abstand der Spritzdüse von der Auftragsfläche beträgt bevorzugt von 1,50 m bis 0,50 m, besonders bevorzugt von 0,80 bis 1,20 m. Die Auftragsdicke der hydraulisch abbindenden Beschichtungsmittel beträgt üblicherweise 5 bis 40 cm. Für das maschinelle Verfahren können beispielsweise Spritzmaschinen oder Spritzroboter eingesetzt werden.

Geeignete kationische Schutzkolloide sind Polymere mit kationischer Ladung. Solcher Polymere sind beispielsweise in E.W. Flick, Water-Soluble Resins - an Industrial Guide, Noyes Publications, Park Ridge, N.J., 1991 beschrieben. Bevorzugt werden Polymere, welche kationische Monomereinheiten enthalten, besonders bevorzugt Monomereinheiten mit quartemären Ammoniumgruppen, Sulfoniumgruppen und Phosphoniumgruppen. Am meisten bevorzugt werden Homo- oder Mischpolymerisate von einem oder mehreren kationischen Monomeren aus der Gruppe umfassend Diallyldimethylammoniumchlorid (DADMAC), Diallyldiethylammoniumchlorid (DADEAC), (3-Methacryloxy)propyltrimethylammoniumchlorid ·(MPTAC), (3-Methacryloxy)-ethyltrimethylammoniumchlorid (METAC), (3-Methacrylamido)pro-pyltrimethyl-ammoniumchlorid (MAPTAC), 2-Dimethylaminoethylmethacrylat oder 3-Dimethylaminopropylmethacrylamid (DMAEMA oder DMAPMA bei pH $\leq 5$ protonierte Spezies).

Im Allgemeinen enthalten die kationischen Schutzkolloide 20 bis 100 Gew.-%, vorzugsweise 50 bis 100 Gew.-%, besonders bevorzugt 100 Gew.-%, kationische Monomereinheiten, bezogen auf das Gesamtgewicht des kationischen Schutzkolloids. Geeignete nichtionische, copolymerisierbare Monomere sind Vinylester mit 1 bis 15 C-Atomen im Carbonsäurerest, wie Vinylacetat, Vinylpropionat, Vinyldodecanoat; Acrylamid, Hydroxyethyl(meth)-acrylat, Hydroxypropyl(meth)acrylat, Ester der Methacrylsäure und Acrylsäure mit Alkoholen mit 4 bis 13 C-Atomen, Polyalkylenglykol-(meth)acrylate mit $C_2$- bis $C_4$-Alkyleneinheiten und Molekulargewichten von 350 bis 2000 g/mol, sowie N-Vinylpyrrolidon, N-Vinylcaprolactam, Acryloxypropyltrialkoxy- und Methacryloxypropyltrialkoxysilane, Vinyltrialkoxysilane und Vinylmethyldialkoxysilane und/oder Mischungen der genannten nichtionischen Comonomere.

Bevorzugt werden kationische Schutzkolloide mit einem K-Wert (Bestimmung in Anlehnung an DIN 53726, 1 Gew.-% in Wasser, 25°C, Ubbelohde-Viskosimeter) von 10 bis 250, besonders bevorzugt 25 bis 130. Die Änderung zur DIN 53726, der Norm für die Bestimmung der Viskosität von PVC im Ubbelohde Viskosimeter, besteht darin, dass als Lösungsmittel anstatt Cyclohexanol Wasser eingesetzt wird. Die Höppler-Viskosität der kationischen Schutzkolloide beträgt 1 bis 50 mPas, vorzugsweise 1 bis 25 mPas, am meisten bevorzugt 1 bis 15 mPas (jeweils Bestimmung mit der Methode nach Höppler bei 20°C gemäß DIN 53015).

Die Herstellung von kationischen Schutzkolloiden ist beispielsweise aus DE-A 102006007282 bekannt und kann beispielsweise durch freie radikalische Polymerisation in wässriger Lösung, in Lösungsmittelgemischen oder in Gegenwart von Salzen, beispielsweise auch in Fällungspolymerisation, beispielsweise durch polymeranaloge Reaktion in Lösung oder Lösungsmittelgemischen, beispielsweise in Suspension oder beispielsweise durch inverse Emulsionspolymerisation erfolgen.

Vorzugsweise enthalten die hydraulisch abbindenden Beschichtungsmittel ein oder mehrere Polymerisate auf Basis ethylenisch ungesättigter Monomere (Basispolymerisate) sowie gegebenenfalls nichtionische Schutzkolloide und/oder nichtionische Emulgatoren.

Für die Herstellung des Basispolymerisats geeignete Monomere sind Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide.

Geeignete Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 9 bis 13 C-Atomen, beispielsweise VeoVa9® oder VeoVa10® (Handelsnamen der Firma Shell). Besonders bevorzugt ist Vinylacetat. Geeignete Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Beispiele für als Basispolymerisat geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und  Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyldodecanoat, Vinylester von alpha-verzweigten Carbonsäuren mit 9 bis 13 C-Atomen wie VeoVa9®, VeoVa10®, VeoVa11O; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.- Vinyllaurat oder Vinylester einer alpha-verzweigten Carbonsäure mit 9 bis 13 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +10°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: $1/Tg = x1/Tg1 + x2/Tg2 + ... + xn/Tgn$, wobei $xn$ für den Massebruch (Gew.-%/100) des Monomeren n steht, und $Tgn$ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Basispolymerisate erfolgt in wässrigem Medium und bevorzugt nach dem Emulsionspolymerisationsverfahren - wie beispielsweise in DE-A 102006007282 beschrieben. Die Basispolymerisate fallen dabei in Form von wässrigen Dispersionen an und können nach gängigen Trocknungsverfahren zu entsprechenden in Wasser redispergierbaren Pulver überführt werden.

Mischungen von kationischen Schutzkolloiden und Basispolymerisaten werden eingesetzt. Derartige Mischungen werden im Folgenden als kationisch stabilisierte Polymerisate bezeichnet. Verfahren zur Herstellung der kationisch stabilisierten Polymerisaten sind beispielsweise aus DE-A 102006007282 bekannt. Kationisch stabilisierte Polymerisate in Form von wässrigen Dispersionen werden beispielsweise erhalten, indem die Polymerisation zur Herstellung der Basispolymerisate in Gegenwart von kationischen Schutzkolloiden durchgeführt wird. Kationisch stabilisierte Polymerisate in Form von wässrigen Dispersionen können auch hergestellt werden, indem  wässrige Dispersionen von Basispolymerisaten mit kationischen Schutzkolloiden gemischt werden. Die kationischen Schutzkolloide können hierbei in fester oder flüssiger Form oder als wässrige Lösung, wässrige Emulsion oder wässrige Dispersion eingesetzt werden. Kationisch stabilisierte Polymerisate in Form von wässrigen Dispersionen sind auch erhältlich, indem kationisch stabilisierte Polymerisate in Form von in Wasser redispergierbaren Pulvern mit Wasser redispergiert werden.

Kationisch stabilisierte Polymerisate in Form von in Wasser redispergierbaren Pulvern werden beispielsweise erhalten, indem wässrige Dispersionen des Basispolymerisats getrocknet werden, wobei die kationischen Schutzkolloide vor, während oder nach der Trocknung zugegeben werden können. Die kationischen Schutzkolloide können dabei auch in Kombination mit nichtionischen Schutzkolloiden oder in Kombination mit nichtionischen Emulgatoren eingesetzt werden. Geeignete nichtionische Schutzkolloide sind beispielsweise Polyvinylalkohole, Polyvinylacetale, Polyvinylpyrrolidone, Polysaccharide in wasserlöslicher Form wie Stärken (Amylose und Amylopectin), Cellulosen und deren Methyl-, Hydroxyethyl-, Hydroxypropyl-Derivate, Poly(meth)acrylamid. Geeignete nichtionische Emulgatoren sind beispielsweise Tenside wie Alkylpolyglykolether oder Alkylarylpolyglykolether mit 8 bis 40 AlkylenoxidEinheiten.

Das kationisch stabilisierte Polymerisat enthält das kationische Schutzkolloid, gegebenenfalls in Kombination mit nichtionischem Schutzkolloid und/oder nichtionischem Emulgator, in einer Menge von insgesamt 0,1 bis 20 Gew.-%, bevorzugt von 1 bis 12 Gew.-%, jeweils bezogen auf die polymeren Bestandteile der kationisch stabilisierten Polymerisate. Kationisch stabilisierte Polymerisate in Form von wässrigen Dispersionen haben einen Feststoffgehalt von vorzugsweise von 10 bis 75 Gew.-%, besonders bevorzugt von 40 bis 60 Gew.-%.

Typische Rezepturen für hydraulisch abbindende Beschichtungsmittel enthalten 15 bis 30 Gew.-% Zement, insbesondere Portland-, Aluminat-, Trass-, Hütten-, Magnesia-, Phosphat- oder Hochofenzement. Ein weiterer Bestandteil sind 50 bis 90 Gew.-% Füllstoffe wie Quarzsand, Kies, carbonatische Füllstoffe wie Calciumcarbonat, Talkum, Leichtfüllstoffe, Hohlkugeln, puzzolanisch reagierende Füllstoffe wie Flugasche, Metakaolin, Mikrosilika, und Gummischnipsel. Des Weiteren werden 0,00005 bis 1,25 Gew.-%, vorzugsweise 0,0005 bis 0,75 Gew.-% kationische Schutzkolloide eingesetzt. Gegebenenfalls werden 0,1 bis 10,0 Gew.-%, vorzugsweise 0,2 bis 3,0 Gew.-% und besonders bevorzugt 0,5 bis 1,5 Gew.-% Basispolymerisate in Form in Wasser redispergierbaren Pulvern oder in Form von wässrigen Dispersionen mit einem Feststoffgehalt von vorzugsweise 10 bis 75 Gew.--, besonders bevorzugt von 40 bis 60 Gew.-%, eingesetzt. Die Angaben in Gew.-% beziehen sich dabei jeweils auf 100 Gew.-% Trockenmasse der Rezeptur. Zur Herstellung der polymermodifizierten hydraulisch abbindenden Beschichtungsmittel werden vorzugsweise 40 bis 60 Gew.-% Wasser, bezogen auf die Gesamtmenge des eingesetzten Zements, eingesetzt.

Die anwendungstechnischen Eigenschaften der hydraulisch abbindenden Beschichtungsmittel können durch Zugabe von Zusatzmitteln verbessert werden. In bevorzugten Ausführungsformen der hydraulisch abbindenden Beschichtungsmitteln enthaltene Zusatzmittel sind beispielsweise 0,1 bis 8 Gew.-% Abbindebeschleuniger, wie beispielsweise Aluminiumsalze, Aluminate, Alkalisilikate, Alkalicarbonate oder Alkalihydroxide. Des Weiteren können Pigmente, Schaumstabilisatoren, Hydrophobierungsmittel, Weichmacher, Flugasche, disperse Kieselsäure, Fließmittel, Luftporenmittel zur Steuerung der Betonrohdichte oder Pumpenhilfsmittel zur Verbesserung der Pumpbarkeit zugesetzt werden.

Die Herstellung der hydraulisch abbindenden Beschichtungsmittel ist an keine spezielle Vorgehensweise oder Mischvorrichtung gebunden und kann beispielsweise in einem Betonmischer oder einem Fertigbetonmischwerk erfolgen. Die hydraulisch abbindenden Beschichtungsmittel können fertig gemischt an die Baustelle geliefert werden. Aus den Bestandteilen der Rezeptur können auch Trockenmischungen hergestellt werden, die erst auf der Baustelle durch Zugabe von Wasser zu hydraulisch abbindenden Beschichtungsmitteln umgesetzt werden.

Beispiele für hydraulisch abbindende Beschichtungsmittel sind Beton, Mörtel, wie beispielsweise Fugenmörtel, Fliesenkleber, Selbstverlaufsmassen, Estrich, Putzen oder Spachtelmassen.

Die nach dem erfindungsgemäßen Verfahren hergestellten Festmassen haben einen Luftgehalt von vorzugsweise kleiner 15,5%, besonders bevorzugt von 5 bis 15%, ganz besonders bevorzugt von 7 bis 14% und am meisten bevorzugt von 10 bis 13,5%, die Angaben in % sind jeweils bezogen auf das Gesamtvolumen der Festmassen.

Die Festmassen enthalten Luftporen mit einem Luftporendurchmesser von 500 bis 50000 nm zu einem Anteil von vorzugsweise $\leq$ 35%, besonders bevorzugt $\leq$ 25% und am meisten bevorzugt $\leq$ 15%, jeweils bezogen auf die Gesamtzahl der in den Festmassen vorhandenen Luftporen.

Zugänglich sind ebenso Festmassen, deren Anteil an Luftporen mit einem Luftporendurchmesser von $\leq$ 500 nm vorzugsweise $\geq$ 60%, besonders bevorzugt $\geq$ 70% und am meisten bevorzugt $\geq$ 80% ist, jeweils bezogen auf die Gesamtzahl der in den Festmassen vorhandenen Luftporen.

Zugänglich sind ebenso Festmassen, in denen maximal 35% der Luftporen einen Durchmesser von 500 bis 50000 nm und mindes-tens 60% der Luftporen einen Durchmesser von $\leq$ 500 nm aufweisen.

Bei Anwendung des maschinellen Verfahrens weisen die Festmassen Dichten von vorzugsweise 2130 bis 2400 kg/m$^3$ auf, besonders bevorzugt von 2150 bis 2400 kg/m$^3$, ganz besonders bevorzugt von 2160 bis 2300 kg/m$^3$ und am meisten bevorzugt von 2170 bis 2300 kg/m$^3$.

Die erfindungemäß erhaltenen Festmassen weisen in Folge ihres geringen Luftgehalts, ihrer Luftporenverteilung und ihrer hohen Dichte eine hohe Druckfestigkeit auf.

Die folgenden Beispiele dienen der detaillierten Erläuterung der Erfindung und sind in keiner Weise als Einschränkung zu verstehen.

Herstellung der Festmassen:

Referenzbeispiel 1 (Bsp. 1): Handverfahren:

Es wurden sämtliche Bestandteile der unter Beispiel 2 angegebenen Rezeptur in einen 100 1 Betonmischer (Zyklos Z 75 Gleichlaufzwangsmischer) gegeben und durch 2 minütiges Rühren gleichmäßig gemischt. Nach 8 minütigem Stehenlassen wurde die Mischung nochmals für 1 min gerührt und währenddessen mit Melaminsulfonat-Formaldehyd-Kondensat versetzt. Das so erhaltene hydraulisch abbindende Beschichtungsmittel wurde nach DIN 196 per Hand mit einer Kelle in eine Schalung (Länge/Höhe/ Breite = 70cm/40cm/70cm) gegeben. Nach 28 Tagen Lagerung bei 23 °C und 50 %iger Luftfeuchtigkeit wurde die Festmasse aus der Schalung entnommen und der anwendungstechnischen Ausprüfung unterzogen.

Beispiel 2 (Bsp. 2): Maschinelles Verfahren:

Zunächst wurden Wasser, Sand, Kies und Portlandzement CEM I 42,5 in den in der Rezeptur angegebenen Mengen in einen 100 1 Betonmischer (Zyklos Z 75 Gleichlaufzwangsmischer) gegeben und durch 2-minütiges Rühren gleichmäßig gemischt. Nach 8-minütigem Stehenlassen wurde die Mischung nochmals für 1 min gerührt und währenddessen mit der angegebenen Menge an Melaminsulfonat-Formaldehyd-Kondensat versetzt, wodurch die Nassbetonmischung erhalten wurde.

Des Weiteren wurde die wässrige Dispersion des kationisch stabilisierten Polymerisats in einem Ultratorax Rührer unter Normalbedingungen nach DIN50014 vorgelegt und unter Rühren mit der wässrigen Dispersion von Aluminiumsulfat versetzt. Nach Rühren für weitere 5,0 min wurde das Additiv erhalten.

Unter Anwendung des Nassspritzverfahrens wurde das Additiv der Nassbetonmischung in der Spritzdüse (Nassspritzdüse NW 50 der Firma Mayco) zugemischt. Die hydraulisch abbindende Masse wurde unter Einsatz von Druckluft mit einem Luftmengenfaktor von 18,4 und einer Strömungsgeschwindigkeit von 108 $m^3$/h in eine Schalung (Länge/Höhe/Breite = 70cm/40cm/70cm) gegossen. Der Abstand der Spritzdüse vom Untergrund betrug 80 cm. Nach 28 Tagen Lagerung bei 23 °C und 50 %iger Luftfeuchtigkeit wurde die Festmasse aus der Schalung entnommen und der anwendungstechnischen Ausprüfung unterzogen.

Rezeptur für das hydraulisch abbindende Beschichtungsmittel:

| | |
|---|---|
| 962 kg | Sand (bis 4,0 mm Korndurchmesser) |
| 643 kg | Kies (4,0 bis 8,0 mm Korndurchmesser) |
| 450 kg | Portlandzement CEM I 42,5 |
| 0,23 kg | Melaminsulfonat-Formaldehyd-Kondensat (Fließmittel) (Sika Addiment FM/F, Handelsname der Firma Sika) |
| 136 kg | Wasser |
| 45 kg | wässrige Dispersion von Aluminiumsulfat (FG = 50 %) |
| 45 kg | wässrige Dispersion des kationisch stabilisierten Polymerisats (FG = 50 %) bestehend aus einer wässrigen Dispersion eines Vinylacetat-Ethylen-Copolymerisats mit einer Tg von -5°C, das bezogen auf das Vinylacetat-Ethylen-Copolymerisat 10 Gew.-% Polytrimethylammonium-propyl-methacrylamid-chlorid enthält. |

Vergleichsbeispiel 1 (VBsp. 1):

Im Unterschied zu Beispiel 1 wurde die Nassbetonmischung mit 156 kg Wasser angemacht und es wurde keine wässrige Dispersion des kationischen Polymerisats zugesetzt.

Vergleichsbeispiel 2 (VBsp. 2):

Im Unterschied zu Beispiel 1 wurde die Nassbetonmischung mit 146 kg Wasser angemacht und an Stelle der wässrigen Dispersion des kationischen Polymerisats wurden 45 kg einer wässrigen Dispersion eines polyvinylalkoholstabilisierten Vinylacetat-Ethylen-Copolymerisats mit einem Feststoffgehalt von 50 Gew.-% und einer Tg von -7 °C eingesetzt.

Vergleichsbeispiel 3 (VBsp. 3):

Im Unterschied zu Beispiel 2 wurde die Nassbetonmischung mit 156 kg Wasser angemacht und es wurde keine wässrige Dispersion des kationischen Polymerisats zugesetzt. Bei der Durchführung des Nassspritzverfahrens wurde Druckluft mit einer Strömungsgeschwindigkeit von 1080 m$^3$/h und mit einem Luftmengenfaktor von 175 eingesetzt.

Vergleichsbeispiel 4 (VBsp. 4):

Im Unterschied zu Beispiel 2 wurde die Nassbetonmischung mit 146 kg Wasser angemacht und an Stelle der wässrigen Dispersion des kationischen Polymerisats wurden 45 kg einer wässrigen Dispersion eines polyvinylalkoholstabilisierten Vinylacetat-Ethylen-Copolymerisats mit einem Feststoffgehalt von 50 Gew.-% und einer Tq von -7 °C eingesetzt. Bei der Durchführung des Nassspritzverfahrens wurde Druckluft mit einer Strömungsgeschwindigkeit von 1080 m$^3$/h und mit einem Luftmengenfaktor von 180 eingesetzt.

Vergleichsbeispiel 5 (VBsp. 5):

Im Unterschied zu Beispiel 2 wurde bei der Durchführung des Nassspritzverfahrens Druckluft mit einer Strömungsgeschwindigkeit von 1080 m$^3$/h und mit einem Luftmengenfaktor von 186 eingesetzt.

Vergleichsbeispiel 6 (VBsp. 6):

Im Unterschied zu Beispiel 2 wurde die Nassbetonmischung mit 156 kg Wasser angemacht und es wurde keine wässrige Dispersion des kationischen Polymerisats zugesetzt.

Vergleichsbeispiel 7 (VBsp. 7):

Im Unterschied zu Beispiel 2 wurde die Nassbetonmischung mit 146 kg Wasser angemacht und an Stelle der wässrigen Dispersion des kationischen Polymerisats wurden 45 kg einer wässrigen Dispersion eines polyvinylalkoholstabilisierten Vinylacetat-Ethylen-Copolymerisats mit einem Feststoffgehalt von 50 Gew.-% und einer Tg von -7 °C eingesetzt.

Tabelle 1: Übersicht über Verfahrensparameter der Beispiele und Vergleichsbeispiele:

|  | Verfahren | Druckluft [m$^3$/h] | Luftmengenfaktor |
|---|---|---|---|
| Bsp. 1 | Hand | - | 0 |
| VBsp. 1 | Hand | - | 0 |
| VBsp. 2 | Hand | - | 0 |
| VBsp. 3 | maschinell | 1080 | 175 |
| VBsp. 4 | maschinell | 1080 | 180 |
| VBsp. 5 | maschinell | 1080 | 186 |
| VBsp. 6 | maschinell | 108 | 17,7 |
| VBsp. 7 | maschinell | 108 | 17,9 |
| Bsp. 2 | maschinell | 108 | 18,4 |

Bestimmung des Luftgehalts der Festmassen:

Der Luftgehalt der Festmassen der Beispiele und Vergleichsbeispiele wurde nach DIN 66133 bestimmt. Die Ergebnisse sind in Tabelle 2 zusammengefasst.

Bestimmung der Dichte der Festmassen:

Die Dichten der aus den nach den Beispielen sowie den Vergleichsbeispielen erhaltenen Festmassen wurde nach DIN EN 196 bestimmt. Die Ergebnisse sind in Tabelle 2 zusammengefasst.

Bestimmung der Druckfestigkeit Festmassen:

Aus den nach den Beispielen sowie den Vergleichsbeispielen erhaltenen Festmassen wurden jeweils zylindrische Bohrkerne mit einer Grundfläche von 200 mm$^2$ und einer Höhe von 100 mm gezogen und gemäß DIN EN 196 auf ihre Druckfestigkeit hin geprüft. Die Ergebnisse sind in Tabelle 2 zusammengefasst.

Bestimmung des Rückpralls:

Die in Beispiel 2 und den Vergleichsbeispielen 3, 4 und 5 beschriebenen, hydraulisch abbindenden Beschichtungsmittel wurden nach dem Nassspritzverfahren unter Anwendung der entsprechenden, in Tabelle 1 aufgeführten Werte für die Strömungsgeschwindigkeiten und Luftmengenfaktoren auf einen vertikalen Untergrund bestehend aus Beton aufgetragen. Der Abstand der Spritzdüse vom Untergrund betrug 80 cm. Die vom Untergrund abgefallene Menge an hydraulisch abbindendem Beschichtungsmittel wurde jeweils ausgewogen und durch die jeweilige Masse der auf den Untergrund gespritzten Menge an hydraulisch abbindendem Beschichtungsmittel dividiert. Die Ergebnisse sind in Tabelle 2 festgehalten.

Aus Tabelle 2 geht hervor, dass bei Einsatz des erfindungsgemäßen Verfahrens fast kein Rückprall entsteht (Tabelle 2, Beispiel 2). Dahingegen entsteht bei Einsatz von Druckluft mit hohen Werten für die Luftmengenfaktoren in erheblichem Umfang Rückprall, der als Abfall entsorgt werden muss (Tabelle 2, Vergleichsbeispiele 3 bis 5).

Tabelle 2:

|  | Luftgehalt [%] | Dichte [kg/m$^3$] | Druckfestigkeit [N/mm$^2$] | Rückprall [%] |
|---|---|---|---|---|
| Bsp. 1 | 13,1 | 2104 | 41,6 | - |
| VBsp. 1 | 16,7 | 1942 | 26,5 | - |
| VBsp. 2 | 17,9 | 2030 | 38,0 | - |
| VBsp. 3 | 12,2 | 2177 | 49,0 | 18,1 |
| VBsp. 4 | 11,1 | 2223 | 54,3 | 14,5 |
| VBsp. 5 | 12,0 | 2181 | 55,6 | 15,3 |
| VBsp. 6 | 16,1 | 2042 | 32,6 | 2,6 |
| VBsp. 7 | 17,4 | 2115 | 43,2 | 1,6 |
| Bsp. 2 | 12,5 | 2175 | 49,3 | 1,5 |

Aus Tabelle 2 geht hervor, dass bei Anwendung des erfindungsgemäßen maschinellen Verfahrens Festmassen mit einem Luftgehalt, einer Dichte bzw. einer Druckfestigkeit erhalten wird (Tabelle 2, Beispiele 2), wie sie bisher nur beim Auftragen von nicht erfindungsgemäßen Beschichtungsmitteln unter Einsatz von Druckluft mit hohen Luftmengenfaktoren erreichbar waren (Tabelle 2, Vergleichsbeispiele 3 bis 5). Ein Vergleich des Luftgehalts, der Dichte bzw. der Druckfestigkeit des Beispiels 2 mit den entsprechenden Werten der Vergleichsbeispiele 6 bzw. 7 macht deutlich, dass mit nicht erfindungsgemäßen Beschichtungsmitteln bei Anwendung des maschinellen Verfahrens mit niedrigen Luftmengenfaktoren keine Festmassen mit hohen Druckfestigkeiten, hohen Dichten bzw. geringen Luftgehalten zugänglich sind.
Bestimmung der Luftporenverteilung der Festmassen:

Die Luftporenverteilung der Festmassen wurde nach DIN 66133 mittels der Quecksilberintrusionsporosometrie bestimmt. Die Ergebnisse sind in Tabelle 3 zusammengefasst.

Tabelle 3: Luftporenverteilung:

|  | Luftporengehalt G [%] in Abhängigkeit vom Luftporendurchmesser d [nm]: | | |
|---|---|---|---|
|  | G(d < 500) | G(500 ≤ d ≤ 50000) | G(d > 50000) |
| Bsp. 1 | 80,3 | 13,9 | 5,8 |
| VBsp. 1 | 53,5 | 39,2 | 7,3 |
| VBsp. 2 | 46,8 | 46,2 | 7,0 |

(fortgesetzt)

| | Luftporengehalt G [%] in Abhängigkeit vom Luftporendurchmesser d [nm]: | | |
|---|---|---|---|
| | G(d < 500) | G(500 $\leq$ d $\leq$ 50000) | G(d > 50000) |
| VBsp. 3 | 88,9 | 5,8 | 5,3 |
| VBsp. 4 | 86,0 | 8,5 | 5,5 |
| VBsp. 5 | 81,6 | 10,9 | 7,5 |
| Bsp. 2 | 83,3 | 9,8 | 6,9 |

Aus Tabelle 3 geht hervor, dass die Luftporenverteilungen der erfindungsgemäß erhältlichen Festmassen unabhängig vom Applikationsverfahren immer analog sind. So führt die Applikation von hydraulisch abbindenden Beschichtungsmitteln maschinell unter Anwendung eines hohen Luftmengenfaktors (Vergleichsbeispiel 5) oder eines niedrigen Luftmengenfaktors (Beispiel 2) immer zu parallelen Verteilungen. Die erfindungsgemäßen Festmassen weisen Luftporenverteilungen auf (Beispiele 2) wie sie bisher bei Auftragen von nicht erfindungsgemäßen hydraulisch abbindenden Beschichtungsmitteln nur unter Anwendung hoher Luftmengenfaktoren erreichbar waren (Vergleichsbeispiele 3 und 4).

**Patentansprüche**

1. Verfahren zur Herstellung von Festmassen mit einem Luftgehalt von $\leq$ 16,0 Volumen-%, bezogen auf das Gesamtvolumen der Festmassen, **dadurch gekennzeichnet, dass** hydraulisch abbindende Beschichtungsmittel enthaltend ein oder mehrere polymere Schutzkolloide, die kationische Ladungen enthalten, und ein oder mehrere Polymerisate auf Basis von Vinylacetat, vinylpropionat, Vinylbutyrat, Vinyl-2-ethylhexanoat, Vinyllaurat, 1-Methyl-vinylacetat, Vinylpivalat, **Vinylester von alpha-verzweigten Monocarbonsäuren mit 9 bis 13 C-Atomen**, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat, Ethylen, Propylen, 1,3-Butadien, Styrol, Vinyltoluol oder Vinylchlorid nach maschinellen Verfahren unter Einsatz von Druckluft mit Luftmengenfaktoren von 10 bis 100 auf einen Untergrund aufgetragen werden.

2. Verfahren zur Herstellung von Festmassen nach Anspruch 1, **dadurch gekennzeichnet, dass** ein oder mehrere Polymerisate eingesetzt werden aus der Gruppe umfassend Vinylacetat-Homopolymerisate;
Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe Vinylpropionat, Vinyldodecanoat und Vinylestern von alpha-verzweigten Carbonsäuren mit 9 bis 13 C-Atomen;
Mischpolymerisate von Vinylacetat, 1 bis 40 Gew.-% Ethylen und gegebenenfalls 1 bis 60 Gew.-% Acrylsäureester aus der Gruppe n-Butylacrylat und 2-Ethylhexylacrylat; Mischpolymerisate mit 30 bis 75 Gew.-% Vinylacetat, 1 bis 30 Gew.-% Vinyllaurat oder Vinylester einer alphaverzweigten Carbonsäure mit 9 bis 13 C-Atomen, sowie 1 bis 30 Gew.-% Acrylsäureester aus der Gruppe n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid;
Mischpolymerisate von n-Butylacrylat oder 2-Ethylhexylacrylat;
Copolymerisate von Methylmethacrylat mit n-Butylacrylat oder 2-Ethylhexylacrylat und gegebenenfalls Ethylen;
Styrol-(Meth)acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-(Meth)acrylsäureester-Copolymerisate mit einem oder mehreren Monomeren aus der Gruppe Methylacrylat, Ethyl-acrylat, Propylacrylat, n-Butylacrylat, 2-Ethylhexylacrylat und gegebenenfalls Ethylen; Styrol-1,3-Butadien-Copolymerisate;
wobei sich die Angaben in Gew.-% auf jeweils 100 Gew.-% aufaddieren.

3. Verfahren zur Herstellung von Festmassen nach Anspruch 1 oder 2, **dadurch gekennzeichnet, dass** ein oder mehrere polymere Schutzkolloide, die kationische Ladungen enthalten, Monomereinheiten mit quarternären Ammoniumgruppen, Sulfoniumgruppen und Phosphoniumgruppen enthalten.

4. Verfahren zur Herstellung von Festmassen nach Anspruch 1 bis 3, **dadurch gekennzeichnet, dass** ein oder mehrere polymere Schutzkolloide, die kationische Ladungen enthalten, Homo- oder Mischpolymerisate sind von einem oder mehreren kationischen Monomeren aus der Gruppe umfassend Diallyldimethylammoniumchlorid (DADMAC), Diallyldiethylammoniumchlorid (DADEAC), (3-Methacryloxy)propyltrimethylammoniumchlorid (MPTAC), (3-Methacryloxy)-ethyltrimethylammoniumchlorid (METAC), (3-Methacrylamido)-propyltrimethyl-ammoniumchlorid (MAPTAC), 2-Dimethylaminoethylmethacrylat und 3-Dimethylaminopropylmethacrylamid (DMAEMA oder DMAPMA bei pH ≤ 5 protonierte Spezies).

**5.** Verfahren zur Herstellung von Festmassen nach Anspruch 1 bis 4, **dadurch gekennzeichnet, dass** die polymeren Schutzkolloide, die kationische Ladungen enthalten, 20 bis 100 Gew.-% kationische Monomereinheiten enthalten, bezogen auf das Gesamtgewicht der polymeren Schutzkolloide, die kationische Ladungen enthalten.

**6.** Verfahren zur Herstellung von Festmassen nach Anspruch 1 bis 5, **dadurch gekennzeichnet, dass** die Höppler-Viskosität der polymeren Schutzkolloide, die kationische Ladungen enthalten, 1 bis 50 mPas beträgt (Bestimmung mit der Methode nach Höppler bei 20°C gemäß DIN 53015).

**7.** Verfahren zur Herstellung von Festmassen nach Anspruch 1 bis 6, **dadurch gekennzeichnet, dass** als hydraulisch abbindende Beschichtungsmittel Beton, Mörtel, Fliesenkleber, Selbstverlaufsmassen, Estrich, Putzen oder Spachtelmassen eingesetzt werden.

**Claims**

**1.** Method for the production of solid materials with an air content of ≤ 16.0 volume %, based on the total volume of the solid materials, **characterized in that** hydraulically setting coating agents containing one or more polymeric protective colloids, which contain cationic charges, and one or more polymers based on vinyl acetate, vinyl propionate, vinyl butyrate, vinyl 2-ethylhexanoate, vinyl laurate, 1-methylvinyl acetate, vinyl pivalate, vinyl esters of alpha-branched monocarboxylic acids with 9 to 13 C atoms, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, norbornyl acrylate, ethylene, propylene, 1,3-butadiene, styrene, vinyl toluene or vinyl chloride
are applied onto an substrate by mechanical methods using compressed air with air consumption factors from 10 to 100.

**2.** Method for the production of solid materials according to Claim 1, **characterized in that** one or more polymers are used from the group comprising vinyl acetate homopolymers;
mixed polymers of vinyl acetate with 1 to 40 wt.% of ethylene;
mixed polymers of vinyl acetate with 1 to 40 wt.% of ethylene and 1 to 50 wt.% of one or more other comonomers from the group of vinyl propionate, vinyl dodecanoate and vinyl esters of alpha-branched carboxylic acids with 9 to 13 C atoms;
mixed polymers of vinyl acetate, 1 to 40 wt.% of ethylene and optionally 1 to 60 wt.% of acrylate esters from the group of n-butyl acrylate and 2-ethylhexyl acrylate;
mixed polymers with 30 to 75 wt.% of vinyl acetate, 1 to 30 wt.% of vinyl laurate or vinyl esters of an alpha-branched carboxylic acid with 9 to 13 C atoms, and 1 to 30 wt.% of acrylate esters from the group of n-butyl acrylate or 2-ethylhexyl acrylate, which also contain 1 to 40 wt.% of ethylene;
mixed polymers with vinyl acetate, 1 to 40 wt.% of ethylene and 1 to 60 wt.% of vinyl chloride;
mixed polymers of n-butyl acrylate or 2-ethylhexyl acrylate;
copolymers of methyl methacrylate with n-butyl acrylate or 2-ethylhexyl acrylate and optionally ethylene; styrene-(meth)acrylate ester copolymers with one or more monomers from the group methyl acrylate, ethyl acrylate, propyl acrylate, n-butyl acrylate and 2-ethylhexyl acrylate;
vinyl acetate-(meth)acrylate ester copolymers with one or more monomers from the group of methyl acrylate, ethyl acrylate, propyl acrylate, n-butyl acrylate, 2-ethylhexyl acrylate and optionally ethylene; styrene-1,3-butadiene copolymers;
where the quantities stated in wt.% in each case add up to 100 wt.%.

**3.** Method for the production of solid materials according to Claim 1 or 2, **characterized in that** one or more polymeric protective colloids containing cationic charges contain monomer units having quarternary ammonium groups, sulfonium groups and phosphonium groups.

**4.** Method for the production of solid materials according to Claims 1 to 3, **characterized in that** one or more polymeric protective colloids containing cationic charges are homopolymers or mixed polymers of one or more cationic monomers from the group comprising diallyldimethylammonium chloride (DADMAC), diallyldiethylammonium chloride (DADEAC), (3-methacryloxy)propyltrimethylammonium chloride (MPTAC), (3-methacryloxy)ethyltrimethylammonium chloride (METAC), (3-methacrylamido)propyltrimethylammonium chloride (MAPTAC), 2-dimethylaminoethyl methacrylate and 3-dimethylaminopropylmethacrylamide (DMAEMA or DMAPMA are protonated species at pH $\leq$ 5).

5. Method for the production of solid materials according to Claims 1 to 4, **characterized in that** the polymeric protective colloids containing cationic charges contain 20 to 100 wt.% of cationic monomer units, based on the total weight of the polymeric protective colloids containing cationic charges.

6. Method for the production of solid materials according to Claims 1 to 5, **characterized in that** the Höppler viscosity of the polymeric protective colloids containing cationic charges is 1 to 50 mPas (determination by the Höppler method at 20°C to DIN 53015).

7. Method for the production of solid materials according to Claims 1 to 6, **characterized in that** concrete, mortar, tile adhesive, self-levelling materials, screeding, putty or fillers are used as hydraulically setting coating agents.

**Revendications**

1. Procédé de fabrication de matières solides ayant une teneur en air $\leq$ 16,0 % en volume, par rapport au volume total des matières solides, **caractérisé en ce que** des agents de revêtement à prise hydraulique contenant un ou plusieurs colloïdes protecteurs polymères qui contiennent des charges cationiques et un ou plusieurs polymères à base d'acétate de vinyle, de propionate de vinyle, de butyrate de vinyle, de 2-éthylhexanoate de vinyle, de laurate de vinyle, d'acétate de 1-méthylvinyle, de pivalate de vinyle, d'esters de vinyle d'acides monocarboxyliques alpha-ramifiés contenant 9 à 13 atomes C, d'acrylate de méthyle, de méthacrylate de méthyle, d'acrylate d'éthyle, de méthacrylate d'éthyle, d'acrylate de propyle, de méthacrylate de propyle, d'acrylate de n-butyle, de méthacrylate de n-butyle, d'acrylate de 2-éthylhexyle, d'acrylate de norbornyle, d'éthylène, de propylène, de 1,3-butadiène, de styrène, de vinyltoluène ou de chlorure de vinyle,
sont appliqués sur un substrat après un procédé mécanique utilisant de l'air comprimé avec des facteurs de quantité d'air de 10 à 100.

2. Procédé de fabrication de matières solides selon la revendication 1, **caractérisé en ce qu'**un ou plusieurs polymères du groupe comprenant les homopolymères d'acétate de vinyle ;
les copolymères d'acétate de vinyle avec 1 à 40 % en poids d'éthylène ;
les copolymères d'acétate de vinyle avec 1 à 40 % en poids d'éthylène et 1 à 50 % en poids d'un ou de plusieurs autres comonomères du groupe constitué par le propionate de vinyle, le dodécanoate de vinyle et les esters de vinyle d'acides carboxyliques alpha-ramifiés contenant 9 à 13 atomes C ;
les copolymères d'acétate de vinyle, 1 à 40 % en poids d'éthylène et éventuellement 1 à 60 % en poids d'un ester de l'acide acrylique du groupe constitué par l'acrylate de n-butyle et l'acrylate de 2-éthylhexyle ; les copolymères contenant 30 à 75 % en poids d'acétate de vinyle, 1 à 30 % en poids de laurate de vinyle ou d'un ester de vinyle d'un acide carboxylique alpha-ramifié contenant 9 à 13 atomes C, ainsi que 1 à 30 % en poids d'un ester de l'acide acrylique du groupe constitué par l'acrylate de n-butyle ou l'acrylate de 2-éthylhexyle, qui contiennent encore 1 à 40 % en poids d'éthylène ;
les copolymères contenant de l'acétate de vinyle, 1 à 40 % en poids d'éthylène et 1 à 60 % en poids de chlorure de vinyle ;
les copolymères d'acrylate de n-butyle ou d'acrylate de 2-éthylhexyle ;
les copolymères de méthacrylate de méthyle avec de l'acrylate de n-butyle ou de l'acrylate de 2-éthylhexyle et éventuellement de l'éthylène ;
les copolymères de styrène-ester de l'acide (méth)acrylique avec un ou plusieurs monomères du groupe constitué par l'acrylate de méthyle, l'acrylate d'éthyle, l'acrylate de propyle, l'acrylate de n-butyle, l'acrylate de 2-éthylhexyle ;
les copolymères d'acétate de vinyle-ester de l'acide (méth)acrylique avec un ou plusieurs monomères du groupe constitué par l'acrylate de méthyle, l'acrylate d'éthyle, l'acrylate de propyle, l'acrylate de n-butyle, l'acrylate de 2-éthylhexyle et éventuellement l'éthylène ;
les copolymères de styrène-1,3-butadiène ;
sont utilisés, les données en % en poids s'additionnant à chaque fois pour atteindre 100 % en poids.

3. Procédé de fabrication de matières solides selon la revendication 1 ou 2, **caractérisé en ce qu'**un ou plusieurs colloïdes protecteurs polymères qui contiennent des charges cationiques contiennent des unités monomères contenant des groupes ammonium quaternaires, des groupes sulfonium et des groupes phosphonium.

4. Procédé de fabrication de matières solides selon les revendications 1 à 3, **caractérisé en ce qu'**un ou plusieurs colloïdes protecteurs polymères qui contiennent des charges cationiques sont des homo- ou copolymères d'un ou de plusieurs monomères cationiques du groupe comprenant le chlorure de diallyldiméthyl-ammonium (DADMAC), le chlorure de diallyldiéthyl-ammonium (DADEAC), le chlorure de (3-méthacryloxy)propyltriméthyl-ammonium (MPTAC), le chlorure de (3-méthacryloxy)-éthyltriméthyl-ammonium (METAC), le chlorure de (3-méthacrylamido)-propyltriméthyl-ammonium (MAPTAC), le méthacrylate de 2-diméthylamino-éthyle et le 3-diméthylaminopropylméthacrylamide (DMAEMA ou DMAPMA, espèce protonée à pH ≤ 5).

5. Procédé de fabrication de matières solides selon les revendications 1 à 4, **caractérisé en ce que** les colloïdes protecteurs polymères qui contiennent des charges cationiques contiennent 20 à 100 % en poids d'unités monomères cationiques, par rapport au poids total des colloïdes protecteurs polymères qui contiennent des charges cationiques.

6. Procédé de fabrication de matières solides selon les revendications 1 à 5, **caractérisé en ce que** la viscosité de Höppler des colloïdes protecteurs polymères qui contiennent des charges cationiques est de 1 à 50 mPas (détermination par la méthode de Höppler à 20 °C selon DIN 53015).

7. Procédé de fabrication de matières solides selon les revendications 1 à 6, **caractérisé en ce que** du béton, des mortiers, des colles à carrelage, des matières autolissantes, une chape, des crépis ou des enduits sont utilisés en tant qu'agents de revêtement à prise hydraulique.

**EP 2 150 509 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0812812 A
- WO 02066393 A
- WO 0005283 A
- WO 2007093551 A
- DE 102006007282 A

**In der Beschreibung aufgeführte Nicht-Patentliteratur**

- **E.W. FLICK.** Water-Soluble Resins - an Industrial Guide. Noyes Publications, 1991
- **FOX T. G.** *Bull. Am. Physics Soc.,* 1956, vol. 1 (3), 123
- Polymer Handbook. J. Wiley & Sons, 1975